# EUROPÄISCHE PATENTSCHRIFT

(11) **EP 1 185 418 B1**
(45) Veröffentlichungstag und Bekanntmachung des Hinweises auf die Patenterteilung: **04.12.2002**
(21) Anmeldenummer: 00936614.7
(22) Anmeldetag: 12.04.2000
(51) Int. Cl.: B41C 1/045, H04N 1/00

(54) **VERFAHREN ZUM AUSMESSEN VON NÄPFCHEN**
METHOD OF GAUGING CUPS
PROCEDE POUR MESURER DES GODETS

(30) Priorität: 03.05.1999 DE 19920206
(43) Veröffentlichungstag der Anmeldung: 13.03.2002
(73) Patentinhaber: Hell Gravure Systems GmbH, 24148 Kiel (DE)
(72) Erfinder: WEIDLICH, Ernst-Rudolf, Gottfried, D-24159 Kiel (DE)
(74) Vertreter: Seemann, Ralph, Dr. Dipl.-Phys.
(86) Internationale Anmeldenummer: DE0001132
(87) Internationale Veröffentlichungsnummer: WO00066361

(56) Entgegenhaltungen:
- US-A- 3 931 570
- US-A- 5 293 426

## Beschreibung

Die Erfindung bezieht sich auf das Gebiet der elektronischen Reproduktionstechnik und betrifft ein Verfahren und eine Vorrichtung zum Ermitteln der Abmessungen von gravierten Probenäpfchen in einer elektrischen Graviermaschine zur Gravur von Druckzylindern für den Tiefdruck sowie eine solche Graviermaschine.

In einer elektronischen Graviermaschine bewegt sich ein Gravierorgan mit einem Gravierstichel als Schneidwerkzeug in axialer Richtung an einem rotierenden Druckzylinder entlang. Der von einem Graviersteuersignal gesteuerte Gravierstichel schneidet eine Folge von in einem Gravurraster angeordneten Näpfchen in die Mantelfläche des Druckzylinders. Das Graviersteuersignal wird durch Überlagerung von Bildsignalwerten, welche die zu gravierenden Tonwerte zwischen "Licht" und "Tiefe" repräsentiert, mit einem periodischen Rastersignal gebildet. Während das Rastersignal eine vibrierende Hubbewegung des Gravierstichels zur Erzeugung des Gravurrasters bewirkt, bestimmen die Bildsignalwerte die geometrischen Abmessungen der in die Mantelfläche des Druckzylinders gravierten Näpfchen.

Vor der eigentlichen Gravur werden bei einer sogenannten Probegravur für vorgegebene Tonwerte Probenäpfchen auf dem Druckzylinder graviert. Nach dem Probeschnitt werden die geometrischen Istabmessungen der gravierten Probenäpfchen mittels einer Näpfchenmeßvorrichtung ausgemessen und mit vorgegebenen geometrischen Sollabmessungen der Näpfchen verglichen. Aus dem Wertevergleich werden Einstellwerte gewonnen, mit denen dann das Graviersteuersignal derart kalibriert wird, daß die bei der späteren Gravur tatsächlich erzeugten Näpfchen den für eine tonwertrichtige Wiedergabe erforderlichen Näpfchen entsprechen.

Aus der US-A-5,293,426 ist bereits ein Verfahren und eine Vorrichtung in Form eines Meßmikroskops zum Ermitteln der Abmessungen von gravierten Probenäpfchen in einer elektrischen Graviermaschine zur Gravur von Druckzylindern sowie eine solche Graviermaschine bekannt.

In der US-A-3,931,570 wird eine portable Meßvorrichtung zum Ausmessen der Volumina von gravierten Näpfchen beschrieben.

Als Näpfchenmeßvorrichtung wird oft eine Videokamera eingesetzt. In diesem Fall werden die geometrischen Istabmessungen der gravierten Probenäpfchen elektronisch in dem von der Videokamera aufgenommenen Videobild ausgemessen.

Zur Gravur von Druckzylindern für den Magazindruck werden in der Praxis mehrere Graviermaschinen eingesetzt, an denen Probegravuren durchzuführen sind. Es erweist sich dann als zweckmäßig, zum Ausmessen der mit den einzelnen Graviermaschinen gravierten Probenäpfchen nur eine einzige Näpfchen-Meßvorrichtung zu verwenden, um nicht bei Verwendung mehrerer Näpfchenmeßvorrichtungen unvermeidlich auftretende Toleranzen berücksichtigen zu müssen.

Aufgabe der vorliegenden Erfindung ist es daher, ein Verfahren und eine Vorrichtung zum Ermitteln der Abmessungen von gravierten Probenäpfchen in einer elektronischen Graviermaschine sowie eine solche Graviermaschine derart zu verbessern, daß insbesondere bei Verwendung einer Vielzahl von Graviermaschinen eine einfache und genaue Messung der gravierten Probenäpfchen ermöglicht wird.

Die Erfindung wird bezüglich des Verfahrens durch die Merkmale des Anspruchs 1, bezüglich der Vorrichtung durch die Merkmale des Anspruchs 10 und bezüglich der Graviermaschine durch die Merkmale des Anspruchs 22 gelöst.

Vorteilhafte Ausgestaltungen und Weiterbildungen sind in den Unteransprüchen angegeben.

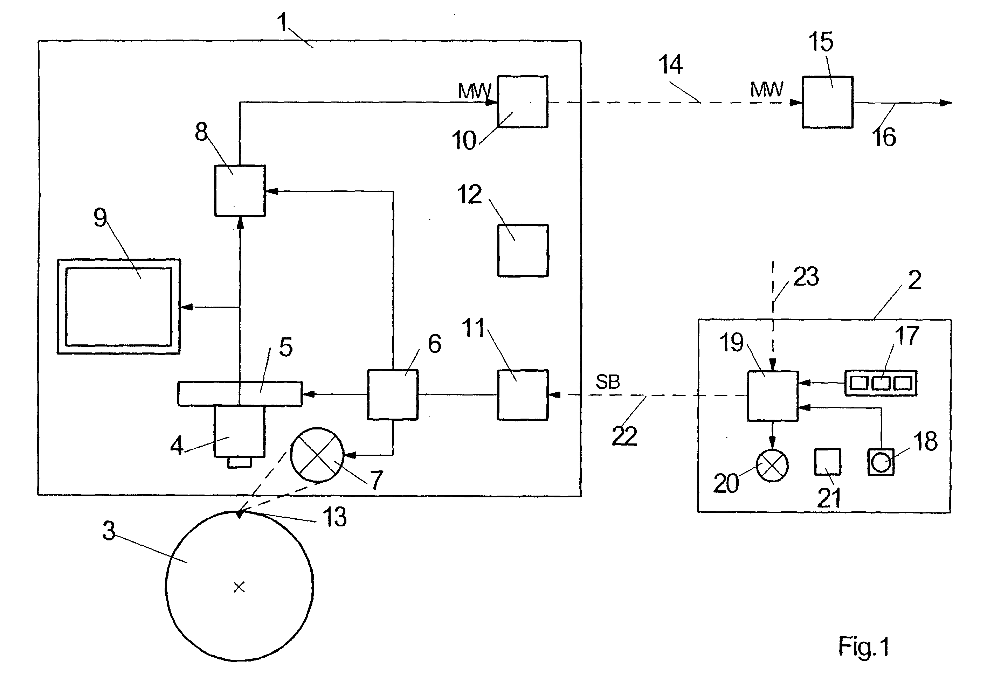

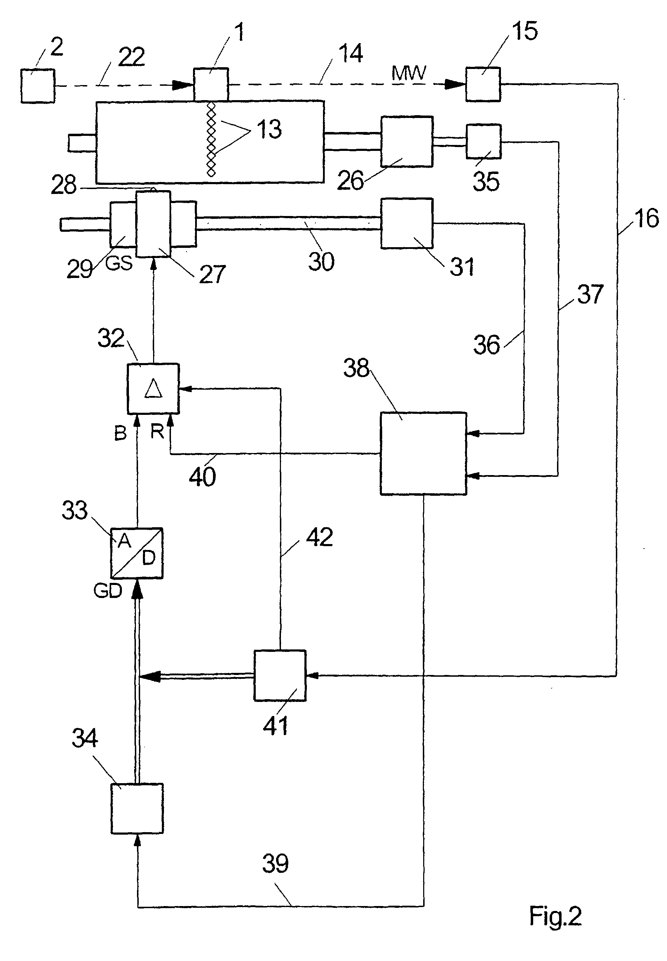

Die Erfindung wird nachfolgend anhand der Fig. 1 und 2 näher erläutert.

Es zeigen:
- Fig. 1: ein Blockschaltbild einer Vorrichtung zum Ausmessen von gravierten Probenäpfchen und
- Fig. 2: ein Blockschaltbild einer Graviermaschine mit einer Vorrichtung zum Ausmessen von gravierten Probenäpfchen.

Fig. 1 zeigt ein Blockschaltbild einer Vorrichtung zum Ausmessen von gravierten Probenäpfchen, die aus einem mobilen Näpfchenmeßgerät (1) und einem mobilen, manuell betätigbaren Bedienungsgerät (2) besteht.

Das mobile Näpfchenmeßgerät (1) wird zum Ermitteln der geometrischen Istabmessungen der bei einer Probegravur gravierten Probenäpfchen auf die Mantelfläche des jeweils gravierten Druckzylinders (3) aufgesetzt. Das mobile Näpfchenmeßgerät (1) besteht prinzipiell aus einer Videokamera (4), einer Positionierungs-vorrichtung (5), einer Steuerstufe (6), einer positionierbaren und einstellbaren Beleuchtungquelle (7), einer Bildauswertestufe (8), einem Kontrollmonitor (9), einem Meßwertsender (10), einem Steuerbefehlsempfänger (11) und zur Energieversorgung der Komponenten aus einer Betriebsspannungsquelle (12), welche als Batterie oder als wiederaufladbarer Akku ausgebildet ist.

Die beispielsweise als CCD-Kamera ausgebildeten Videokamera (4) ist auf die in den Druckzylinder (3) gravierten Probenäpfchen (13) gerichtet, die von der Beleuchtungsquelle (7) beleuchtet werden. Die Positionierungsvorrichtung (5) ist beispielsweise als Verschiebetisch ausgebildet, auf dem die Videokamera (4) montiert ist. Der Verschiebetisch der Positionierungsvorrichtung (5) wird von der Steuerstufe (6) betätigt und ermöglicht zum Auffinden des optimalen Bildausschnitts eine flächenhafte Verschiebung der Videokamera (4) gegenüber der Mantelfläche des Druckzylinders (3). Gleichzeitig kann die Steuerstufe (6) eine zusätzliche Verschiebung der Videokamera (4) bzw. des Objektivs der Videokamera (4) in Richtung auf den Druckzylinder (3) ausführen, um eine optimale Fokussierung der Videokamera (4) auf die gravierten Probenäpfchen (13) zu erreichen.

Das von der Videokamera (4) aufgenommene Videobild der gravierten Probenäpfchen (13) wird der Bildauswertestufe (8) und zur visuellen Beobachtung des Meßvorganges dem Kontrollmonitor (9) zugeführt. Der Kontrollmonitor (9) ist beispielsweise als Flachbildschirm ausgebildet. In der Bildauswertestufe (8) werden durch eine automatische elektronische Auswertung des mit der Videokamera (4) aufgenommenen Videobildes der gravierten Probenäpfchen (13) deren geometrischen Istabmessungen, wie beispielsweise Längs- und Querdiagonalen, ermittelt und als Meßwerte MW dem Meßwertsender (10) zugeführt. Die automatische elektronische Auswertung des Videobildes in der Bildauswertestufe (8) erfolgt beispielsweise nach der WO-A-98/55302.

Die von dem mobilen Näpfchenmeßgerät (1) ermittelten Meßwerte MW werden von dem integrierten Meßwertsender (10) über einen Übertragungskanal (14) drahtlos an einen Meßwertempfänger (15) übertragen und dort über eine Leitung (16) zur Weiterverarbeitung weitergeleitet. Vorzugsweise ist der Meßwertempfänger (15) ortsfest und an oder in der nicht dargestellten Graviermaschine installiert. Zur Vermeidung von Störungen bei der Meßwertübertragung, insbesondere bei mehreren Graviermaschinen, erweist es sich als zweckmäßig, die Meßwertübertragung auf die Kalibrierungsphase der jeweiligen Graviermaschine zu begrenzen.

Das ebenfalls mobile Bedienungsgerät (2) besteht im wesentlichen aus einer von einem Operator betätigbaren Funktionstastatur (17) und einem als Joystick ausgebildeten Positionierungshebel (18), sowie aus einem Steuerbefehls-Sender/Empfänger (19), einer Kontrollvorrichtung (20), beispielsweise in Form einer Kontrollleuchte, und einer Betriebsspannungsquelle (21), welche wiederum als Batterie oder als wiederaufladbarer Akku ausgebildet ist.

Mittels der Funktionstastatur (17) und dem Joystick (18) des mobilen Bedienungsgerätes (2) kann der Operator das Näpfchenmeßgerät (1) fernsteuern, indem die entsprechenden Steuerbefehle SB drahtlos von dem Steuerbefehls-Sender/Empfänger (19) des Bedienungsgerätes (2) über einen Übertragungskanal (22) an den Steuerbefehlsempfänger (11) des Näpfchenmeßgerätes (1) übertragen und an die Positionierungsvorrichtung (5), die Bildauswertestufe (8) und an die Beleuchtungsquelle (7) weitergeleitet werden.

Durch entsprechende Steuerbefehle SB kann der Operator beispielsweise die Positionierung und Fokussierung der Videokamera (4) insbesondere bei Verwendung von Druckzylindern (3) unterschiedlicher Durchmesser, die Funktionen der Bildauswertestufe (8) und die Beleuchtungsquelle (7) bezüglich einer optimalen Ausleuch-tung der Probenäpfchen (13) auf dem Druckzylinder (3) unter Sichtkontrolle des aufgenommenen Videobildes mittels des Kontrollmonitors (9) steuern.

Über den Steuerbefehls-Sender/Empfänger (19) und einen weiteren Übertragungskanal (23) erhält das Bedienungsgerät (2) einen Freigabebefehl von der nicht dargestellten Graviermaschine. Der Freigabebefehl signalisiert dem Operator mittels der Kontrollvorrichtung (20), daß die Graviermaschine für eine Meßvorgang bereit ist.

Die Übertragung der Meßwerte und Steuerbefehle erfolgt z.B. durch Infrarotlicht, Schall oder durch HF-Signale.

Anstelle einer manuellen Einstellung der Videokamera (4) und/oder der Beleuchtungsquelle (7) durch den Operator, können diese Einstellungen in vorteilhafter Weise auch automatisch durch eine entsprechende Auswertung des von der Videokamera (4) aufgenommenen Videobildes in der Bildauswertestufe (8) gesteuert werden, indem die Lage eines ausgewählten Probenäpfchens (13) im Videobild festgestellt, aus der Lage Positionskoordinaten ermittelt und diese zur Positionskorrektur der Videokamera (4) an die Positionierungsvorrichtung (5) gegeben werden, wobei durch die Positionskorrektur erreicht wird, daß das ausgewählte Probenäpfchen (13) zwecks einer sicheren Auswertung im mittleren Bereich des Videobildes liegt.

In vorteilhafter Weise weist die Graviermaschine eine geeignete Ablagevorrichtung auf, auf der das Näpfchenmeßgerät (1) und das Bedienungsgerät (2) bei Nichtbenutzung abgelegt werden können und die gleichzeitig als Ladestation für die Akkus der Geräte verwendet werden kann.

Eine solche mobile Vorrichtung zum Ausmessen gravierter Probenäpfchen nach einer Probegravur kann mit Vorteil bei einer Vielzahl von Graviermaschinen eingesetzt werden, wobei das Näpfchenmeßgerät (1) bedarfsweise von Graviermaschine zu Graviermaschine transportiert wird und jede Graviermaschine mit einem entsprechenden Meßwertempfänger ausgerüstet ist. Um Beschädigungen eines auf einen Druckzylinder aufgesetzten Näpfchenmeßgerätes (1) bei versehentlichem Gravurstart zu vermeiden, erweist es sich als zweck-mäßig, jede Graviermaschine mit einer Kontrollvorrichtung auszurüsten, welche die Anwesenheit eines Näpfchenmeßgerätes (1) auf einem Druckzylinder überwacht und gegebenenfalls einen Gravurstart verhindert. Eine solche Kontrollvorrichtung ist beispielsweise in der deutschen Patentanmeldung P des Anmelders beschrieben.

Fig. 2 zeigt ein Blockschaltbild einer Graviermaschine mit einer Vorrichtung zum Ausmessen von gravierten Probenapfchen. Die Graviermaschine ist beispielsweise ein HelioKlischograph® der Firme Hell Gravure Systems GmbH, Kiel, DE.

Der Druckzylinder (3) wird von einem Zylinderantrieb (26) rotatorisch angetrieben. Die Gravur auf dem Druckzylinder (3) erfolgt mittels eines Gravierorgans (27), das beispielsweise als elektromagnetisches Gravierorgan mit einem Gravierstichel (28) als Schneidwerkzeug ausgebildet ist. Das Gravierorgan (27) befindet sich auf einem Gravierwagen (29), der mittels einer Spindel (30) von einem Gravierwagenan-trieb (31) axial an dem Druckzylinders (3) vorbei bewegt wird.

Der Gravierstichel (28) des Gravierorgans (27) wird durch ein Graviersteuersignal GS gesteuert. Das Graviersteuersignal GS wird in einem Gravierverstärker (32) durch Überlagerung eines periodischen Rastersignals R mit Bildsignalwerten B gebildet, welche die Tonwerte der zu gravierenden Näpfchen zwischen "Licht" und "Tiefe" repräsentieren. Während das periodische Rastersignal R eine vibrierende Hubbewegung des Gravierstichels (28) zur Erzeugung des Gravurrasters bewirkt, bestimmen die Bildsignalwerte B entsprechend den zu gravierenden Tonwerten die Eindringtiefe des Gravierstichels (28) in den Druckzylinder (3).

Die analogen Bildsignalwerte B werden in einem D/A-Wandler (33) aus Gravurdaten GD gewonnen, die in einem Gravurdatenspeicher (34) abgelegt sind und aus diesem Gravierlinie für Gravierlinie ausgelesen und dem D/A-Wandler (33) zugeführt werden.
Dem Druckzylinder (1) ist ein XY-Koordinatensystem zugeordnet, dessen X-Achse in Achsrichtung und dessen Y-Achse in Umfangsrichtung des Druckzylinders (3) orientiert sind. Der Gravierwagenantrieb (31) erzeugt die x-Ortskoordinaten und ein mit dem Zylinderantrieb (26) mechanisch gekoppelter Positionsgeber (35) erzeugt die y-Ortskoordinaten, die über Leitungen (36, 37) einem Steuerwerk (38) zugeführt werden.

Das Steuerwerk (38) steuert die Adressierung und das Auslesen der Gravurdaten (GD) aus dem Gravurdatenspeicher (34) in Abhängigkeit von den xy-Ortskoordinaten der aktuellen Gravierorte über eine Leitung (39). Das Steuerwerk (38) erzeugt außerdem das Rastersignal R auf einer Leitung (40).

Zur Durchführung eines Probeschnitts vor der eigentlichen Gravur weist die Graviermaschine einen Probegravurrechner (41) auf, der die zur Gravur der Probenäpfchen (13) erforderlichen Gravurdaten (GD*) an den D/A-Wandler (33) liefert, welche die vorgegebenen Soll-Tonwert der Probenäpfchens (13) repräsentieren.

Nach der Probegravur wird das mobile Näpfchenmeßgerät (1) auf den Druckzylinder (3) aufgesetzt und von dem Operator mittels des mobilen Bedienungsgerätes (2) drahtlos über den Übertragungskanal (22) gesteuert. Mit dem Näpfchenmeßgerät (2) werden dann die geometrischen Istabmessungen der gravierten Probenäpfchen (13) ausgemessen und als Meßwerte MW drahtlos über den Übertragungskanal (14) an den ortsfesten Meßwertempfänger (15) übertragen, von dem die Meßwerte MW über die Leitung (16) an den Probegravurrechner (41) weitergeleitet werden. In dem Probegravurrechner (41) werden durch Vergleich der gemessenen Istabmessungen mit vorgegebenen Sollabmessungen Einstellwerte zur Kalibrierung des Gravierverstärkers (32) gewonnen, die diesem über eine Leitung (42) zugeführt werden.

## Patentansprüche

1. Verfahren zum Ermitteln der Abmessungen von gravierten Näpfchen in einer elektronischen Graviermaschine zur Gravur von Druckzylindern für den Tiefdruck, bei dem
- ein durch ein Graviersteuersignal (GS) gesteuertes Gravierorgan (27) eine Folge von Näpfchen in den rotierenden Druckzylinder (3) eingraviert, wobei die Abmessungen der gravierten Näpfchen die Ist-Tonwerte repräsentieren,
- bei einer Probegravur Näpfchen (13) für vorgegebene Soll-Tonwerte graviert werden und
- die Istabmessungen der Näpfchen (13) mittels einer Meßvorrichtung ausgemessen und mit den die vorgegebenen Soll-Tonwerte bestimmenden Sollabmessungen verglichen werden, um Einstellwerte zu gewinnen, mit denen das Graviersteuersignal (GS) derart kalibriert wird, daß die gravierten Ist-Tonwerte den zu gravierenden Soll-Tonwerten entsprechen, **dadurch gekennzeichnet, daß**
- die Meßvorrichtung als mobiles Näpfchenmeßgerät (1) ausgebildet ist, das jeweils auf den auszumessenden Druckzylinder (3) aufgesetzt wird, und
- die mit dem mobilen Näpfchenmeßgerät (1) ermittelten Abmessungen der Näpfchen (13) drahtlos an einen Meßwertempfänger (15) übertragen und weiterverarbeitet werden.

2. Verfahren nach Anspruch 1, **dadurch gekennzeichnet, daß** der Meßwertempfänger (15) ortsfest ist.

3. Verfahren nach Anspruch 1 oder 2, **dadurch gekennzeichnet, daß** die Meßwertübertragung nur während der Kalibrierung des Graviersteuersignals (GS) erfolgt.

4. Verfahren nach mindestens einem der Ansprüche 1 bis 3, **dadurch gekennzeichnet, daß** die Funktionen des mobilen Näpfchenmeßgerätes (1) durch ein manuell betätigtes, mobiles Bedienungsgerät (2) gesteuert werden.

5. Verfahren nach mindestens einem der Ansprüche 1 bis 4, **dadurch gekennzeichnet, daß**
- in dem mobilen Bedienungsgerät (2) Steuerbefehle (SB) erzeugt werden und
- die Steuerbefehle (SB) zur Steuerung der Funktionen des mobilen Näpfchenmeßgerätes (1) von dem mobilen Bedienungsgerät (2) drahtlos an das Näpfchenmeßgerät (1) übertragen werden.

6. Verfahren nach mindestens einem der Ansprüche 1 bis 5, **dadurch gekennzeichnet, daß** mit dem mobilen Bedienungsgerät (2) die Positionierung des Näpfchenmeßgerätes (1) bezüglich des Druckzylinders (3) gesteuert wird.

7. Verfahren nach mindestens einem der Ansprüche 1 bis 6, **dadurch gekennzeichnet, daß** mit dem mobilen Bedienungsgerät (2) die Fokussierung des Näpfchenmeßgerätes (1) auf den Druckzylinder (3) gesteuert wird.

8. Verfahren nach mindestens einem der Ansprüche 1 bis 7, **dadurch gekennzeichnet, daß** mit dem mobilen Bedienungsgerät (2) die Ausleuchtung der gravierten Näpfchen (13) gesteuert wird.

9. Verfahren nach mindestens einem der Ansprüche 1 bis 8, **dadurch gekennzeichnet, daß** das mobile Näpfchenmeßgerät (1) und/oder das Bedienungsgerät (2) mit einer wiederaufladbaren Betriebsspannungsquelle betrieben wird.

10. Vorrichtung zum Ermittlung der Abmessungen von gravierten Näpfchen in einer Graviermaschine zur Gravur von Druckzylindern für den Tiefdruck, **dadurch gekennzeichnet, daß**
- die Vorrichtung als mobiles Näpfchenmeßgerät (1) ausgebildet ist, das jeweils auf den auszumessenden Druckzylinder (3) aufsetzbar ist, und
- die mit dem mobilen Näpfchenmeßgerät (1) ermittelten Abmessungen der Näpfchen (13) mittels eines integrierten Meßwertsenders (10) drahtlos an einen Meßwertempfänger (15), vorzugsweise an einen ortsfesten Meßwertsender (15), übertragbar und weiterverarbeitbar sind.

11. Vorrichtung nach Anspruch 10, **dadurch gekennzeichnet, daß** das mobile Näpfchenmeßgerät (1) aus folgenden Komponenten besteht:
- einer Videokamera (4) zur Aufnahme eines Videobildes der Näpfchen (13),
- einer Beleuchtungsquelle (7) zur Ausleuchtung der Näpfchen (13),
- einer mit der Videokamera (4) verbundenen Bildauswertestufe (8) zur Ermittlung der Abmessungen der Näpfchen (13) durch elektronische Auswertung des Videobildes und
- einem mit der Bildauswertestufe (8) verbundenen Meßwertsender (10) zur drahtlosen Übertragung der ermittelten Abmessungen der Näpfchen (13) an einen ortsfesten Meßwertempfänger (15).

12. Vorrichtung nach Anspruch 10, **dadurch gekennzeichnet, daß** die Vorrichtung eine wiederaufladbare Betriebsspannungsquelle (12) aufweist.

13. Vorrichtung nach Anspruch 10 oder 11, **dadurch gekennzeichnet, daß** die Beleuchtungsquelle (7) zur Korrektur der Ausleuchtung der Näpfchen (13) steuerbar ist.

14. Vorrichtung nach mindestens einem der Ansprüche 10 bis 13, **dadurch gekennzeichnet, daß** eine mit der Videokamera (4) in Wirkverbindung stehende steuerbare Positionierungsvorrichtung (5) zur Positionierung und/oder Fokussierung der Videokamera (4) vorgesehen ist.

15. Vorrichtung nach mindestens einem der Ansprüche 10 bis 14, **dadurch gekennzeichnet, daß** eine mit der Positionierungsvorrichtung (5) und der Beleuchtungsquelle (7) verbundene Steuerstufe (6) vorhanden ist, um die Positionierungsvorrichtung (5) und/oder die Beleuchtungsquelle (7) in Abhängigkeit von Steuerbefehlen (SB) zu steuern.

16. Vorrichtung nach mindestens einem der Ansprüche 10 bis 15, **dadurch gekennzeichnet, daß** ein an die Steuerstufe (6) angeschlossener Steuerbefehlsempfänger (11) vorhanden ist, welcher drahtlos Steuerbefehle (SB) empfängt.

17. Vorrichtung nach mindestens einem der Ansprüche 10 bis 16, **dadurch gekennzeichnet, daß** zur Kontrolle des Meßvorgangs ein Kontrollmonitor (9) vorgesehen ist.

18. Vorrichtung nach mindestens einem der Ansprüche 10 bis 17, **dadurch gekennzeichnet, daß**
- die Steuerbefehle (SB) in einem manuell betätigbaren, mobilen Bedienungsgerät (2) erzeugt werden und
- die Steuerbefehle (SB) von dem mobilen Bedienungsgerät (2) mittels eines Steuerbefehlssenders (19) drahtlos an das mobile Näpfchenmeßgerät (1) übertragbar sind.

19. Vorrichtung nach Anspruch 18, **dadurch gekennzeichnet, daß** die Steuerbefehle (SB) in dem mobilen Bedienungsgerät (2) durch eine manuell betätigbare Tastatur (17) und/oder durch manuell betatigbare Positionierungsmittel (18) erzeugbar sind.

20. Vorrichtung nach Anspruch 18 oder 19, **dadurch gekennzeichnet, daß** das mobile Bedienungsgerät (2) eine wiederaufladbare Betriebsspannungsquelle (21) aufweist.

21. Vorrichtung nach einem der Ansprüche 18 bis 20, **dadurch gekennzeichnet, daß** das mobile Bedienungsgerät (2) durch einen Freigabebefehl von der Graviermaschine aktivierbar ist.

22. Graviermaschine zur Gravur von Druckzylindern für den Tiefdruck, bestehend aus
- einem rotationsfähig gelagerten Druckzylinder (3), der von einem ersten Antrieb (26) angetrieben wird
- einem durch ein Graviersteuersignal (GS) beaufschlagten Gravierorgan (27) zur Gravur von Näpfchen in den Druckzylinder (3), das durch einen zweiten Antrieb (31) an dem Druckzylinder (3) entlang bewegbar ist,
- einer Signalaufbereitungsstufe (32, 33, 34, 38) zur Erzeugung des Graviersteuersignals (GS) für das Gravierorgan (27) und
- einem Probegravurrechner (41), in dem Graviersteuersignalwerte zur Gravur von Näpfchen (13) bereitstellbar und die mittels einer Meßvorrichtung ermittelten Istabmessungen der Näpfchen (13), welche die Ist-Tonwerte repräsentieren, mit den die vorgegebenen Soll-Tonwerte bestimmenden Sollabmessungen vergleichbar sind, um Einstellwerte für die Kalibrierung des Graviersteuersignals (GS) zu gewinnen, **dadurch gekennzeichnet, daß**
- die Meßvorrichtung als mobiles Näpfchenmeßgerät (1) ausgebildet ist, das jeweils auf den auszumessenden Druckzylinder (3) aufgesetzt wird, und
- die mit dem mobilen Näpfchenmeßgerät (1) ermittelten Abmessungen der Näpfchen (13) mittels eines integrierten Meßwertsender (1) drahtlos an einen ortsfesten Meßwertempfänger (15) in der Graviermaschine übertragbar und weiterverarbeitbar sind.

23. Vorrichtung nach Anspruch 22, **dadurch gekennzeichnet, daß** das mobile Näpfchenmeßgerät (1) aus folgenden Komponenten besteht:
- einer Videokamera (4) zur Aufnahme eines Videobildes der Näpfchen (13),
- einer mit der Videokamera (4) in Wirkverbindung stehenden, durch Steuerbefehle (SB) steuerbaren Positionierungsvorrichtung (5) zur Positionierung und/oder Fokussierung der Videokamera (4),
- einer durch Steuerbefehle (SB) steuerbare Beleuchtungsquelle (7) zur Ausleuchtung der Näpfchen (13),
- einer mit der Videokamera (4) verbundenen Bildauswertestufe (8) zur Ermittlung der Abmessungen der Näpfchen (13) durch elektronische Auswertung des Videobildes,
- eine wiederaufladbare Betriebsspannungsquelle (12) und
- einem mit der Bildauswertestufe (8) verbundenen Meßwertsender (10) zur drahtlosen Übertragung der ermittelten Abmessungen der Näpfchen (13) an einen ortsfesten Meßwertempfänger (15).

24. Graviermaschine nach Anspruch 22 oder 23, **dadurch gekennzeichnet, daß**
- die Steuerbefehle (SB) in einem manuell betätigbaren, mobilen Bedienungsgerät (2) erzeugt werden und
- die Steuerbefehle (SB) von dem mobilen Bedienungsgerät (2) mittels eines Steuerbefehlssenders (19) drahtlos an das mobile Näpfchenmeßgerät (1) übertragbar sind.

## Claims

1. Method for determining the dimensions of engraved cells in an electronic engraving machine for the engraving of printing cylinders for intaglio printing, wherein
- an engraving head (27) controlled by an engraving control signal (GS) engraves a series of cells into the rotating printing cylinder (3), the dimensions of the engraved cells representing the actual tone values,
- cells (13) for specified required tone values are engraved in a test cut, and
- the actual dimensions of the cells (13) are measured by means of a measuring apparatus and compared with the required dimensions determining the specified required tone values, in order to obtain setting values with which the engraving control signal (GS) is calibrated so that the tone values actually engraved correspond to the required tone values to be engraved, **characterized in that**
- the measuring apparatus is configured as a mobile cell-measuring unit (1) mounted on the individual printing cylinder (3) to be measured, and
- the dimensions of the cells (13) determined with the mobile cell-measuring unit (1) are transmitted wirelessly to a measured-value receiver (15) for further processing.

2. Method according to Claim 1, **characterized in that** the measured-value receiver (15) is fixed.

3. Method according to Claim 1 or Claim 2, **characterized in that** transmission of measured values takes place only while the engraving control signal (GS) is being calibrated.

4. Method according to at least one of Claims 1 to 3, **characterized in that** the functions of the mobile cell-measuring unit (1) are controlled by a manually operated mobile control unit (2).

5. Method according to at least one of Claims 1 to 4, **characterized in that**
- control commands (SB) are generated in the mobile control unit (2), and
- the control commands (SB) for controlling the functions of the mobile cell- measuring unit (1) are transmitted wirelessly from the mobile control unit (2) to the cell-measuring unit (1).

6. Method according to at least one of Claims 1 to 5, **characterized in that** the positioning of the cell-measuring unit (1) with respect to the printing cylinder (3) is controlled by means of the mobile control unit (2).

7. Method according to at least one of Claims 1 to 6, **characterized in that** the focusing of the cell-measuring unit (1) on the printing cylinder (3) is controlled by means of the mobile control unit (2).

8. Method according to at least one of Claims 1 to 7, **characterized in that** the illumination of the engraved cells (13) is controlled by means of the mobile control unit (2).

9. Method according to at least one of Claims 1 to 8, **characterized in that** the mobile cell-measuring unit (1) and/or the control unit (2) is (or are) operated by means of a rechargeable operating-voltage source.

10. Apparatus for determining the dimensions of engraved cells in an engraving machine for the engraving of printing cylinders for intaglio printing, **characterized in that**
- the apparatus is configured as a mobile cell-measuring unit (1) mountable on the individual printing cylinder (3) to be measured, and
- the dimensions of the cells (13) determined with the mobile cell-measuring unit (1) are transmissible wirelessly by means of an integrated measured-value transmitter (10) to a measured-value receiver (15), preferably a fixed measured- value transmitter (15), for possible further processing.

11. Apparatus according to Claim 10, **characterized in that** the mobile cell-measuring unit (1) comprises the following components:
- a video camera (4) to take a video picture of the cells (13),
- a light source (7) to illuminate the cells (13),
- an image evaluation stage (8) connected to the video camera (4), to determine the dimensions of the cells (13) by electronic analysis of the video picture, and
- a measured-value transmitter (10) connected to the image evaluation stage (8), to transmit the detected dimensions of the cells (13) wirelessly to a fixed measured-value receiver (15).

12. Apparatus according to Claim 10, **characterized in that** the apparatus has a rechargeable operating-voltage source (12).

13. Apparatus according to Claim 10 or Claim 11, **characterized in that** the light source (7) is controllable to correct the illumination of the cells (13).

14. Apparatus according to at least one of Claims 10 to 13, **characterized in that** a controllable positioning apparatus (5) actively connected to the video camera (4) is provided, for the positioning and/or focusing of the video camera (4).

15. Apparatus according to at least one of Claims 10 to 14, **characterized in that** a control stage (6) connected to the positioning apparatus (5) and light source (7) is provided, to control the positioning apparatus (5) and/or light source (7) in accordance with control commands (SB).

16. Apparatus according to at least one of Claims 10 to 15, **characterized in that** a control-command receiver (11) connected to the control stage (6) is provided, which wirelessly receives control commands (SB).

17. Apparatus according to at least one of Claims 10 to 16, **characterized in that** a monitor (9) is provided to monitor the measuring operation.

18. Apparatus according to at least one of Claims 10 to 17, **characterized in that**
- the control commands (SB) are generated in a manually operable mobile control unit (2), and
- the control commands (SB) are transmissible wirelessly from the mobile control unit (2) to the mobile cell-measuring unit (1) by means of a control-command transmitter (19).

19. Apparatus according to Claim 18, **characterized in that** the control commands (SB) can be generated in the mobile control unit (2) via a manually operable keyboard (17) and/or via manually operable positioning means (18).

20. Apparatus according to Claim 18 or Claim 19, **characterized in that** the mobile control unit (2) has a rechargeable operating-voltage source (21).

21. Apparatus according to any one of Claims 18 to 20, **characterized in that** the mobile control unit (2) can be activated by an enable command from the engraving machine.

22. Engraving machine for the engraving of printing cylinders for intaglio printing, comprising
- a rotatably mounted printing cylinder (3), driven by a first drive (26),
- an engraving head (27) under the control of an engraving control signal (GS), for engraving cells into the printing cylinder (3), the said engraving head (27) being traversable along the printing cylinder (3) by a second drive (31),
- a signal preparation stage (32, 33, 34, 38) to generate the engraving control signal (GS) for the engraving head (27), and
- a test-cut computer (41) in which engraving control signal values for the engraving of cells (13) can be supplied and the actual dimensions of cells (13) determined by means of a measuring apparatus and representing the actual tone values can be compared with the required dimensions determining the specified required tone values in order to obtain setting values for calibrating the engraving control signal (GS), **characterized in that**
- the measuring apparatus is configured as a mobile cell-measuring unit (1) mounted on the individual printing cylinder (3) to be measured, and
- the dimensions of the cells (13) determined with the mobile cell-measuring unit (1) are transmissible wirelessly by means of an integrated measured-value transmitter (1) to a fixed measured-value receiver (15) in the engraving machine, for possible further processing.

23. Apparatus according to Claim 22, **characterized in that** the mobile cell- measuring unit (1) comprises the following components:
- a video camera (4) to take a video picture of the cells (13),
- a positioning apparatus (5) actively connected to the video camera (4) and controllable by control commands (SB) to position and/or focus the video camera (4),
- a light source (7) controllable by control commands (SB) to illuminate the cells (13),
- an image evaluation stage (8) connected to the video camera (4), to determine the dimensions of the cells (13) by electronic analysis of the video picture,
- a rechargeable operating-voltage source (12), and
- a measured-value transmitter (10) connected to the image evaluation stage (8), to transmit the detected dimensions of the cells (13) wirelessly to a fixed measured-value receiver (15).

24. Engraving machine according to Claim 22 or Claim 23, **characterized in that**
- the control commands (SB) are generated in a manually operable mobile control unit (2), and
- the control commands (SB) are transmissible wirelessly from the mobile control unit (2) to the mobile cell-measuring unit (1) by means of a control-command transmitter (19).

## Revendications

1. Procédé pour déterminer les dimensions de cuvettes gravées par une machine de gravure électronique pour graver des cylindres d'impression pour l'impression en taille douce, selon lequel,
- un organe de gravure (27) grave une succession de cuvettes dans le cylindre d'impression (3) mis en rotation, à partir d'un signal de commande de gravure (GS), les dimensions des cuvettes à graver représentant la valeur réelle de la teinte,
- lors d'une gravure d'échantillon de cuvettes (13) on grave des valeurs de teinte de consigne, prédéterminées, et
- on mesure les dimensions réelles des cuvettes (13) à l'aide d'un dispositif de mesure et on les compare aux dimensions de consigne définissant les valeurs de teinte de consigne prédéterminées pour obtenir des valeurs de réglage à l'aide desquelles on calibre le signal de commande de gravure (GS) pour que les valeurs de teinte réelles, gravées correspondent aux valeurs de teinte de consigne à graver,
**caractérisé en ce que**
- le dispositif de mesure est un appareil de mesure de cuvettes (1) mobile, placé chaque fois sur le cylindre d'impression (3) à mesurer, et
- on transmet par une liaison sans fil les dimensions des cuvettes (13) fournies par l'appareil de mesure de cuvettes (1), mobile, à un récepteur de valeurs de mesure (15) et on poursuit leur traitement.

2. Procédé selon la revendication 1,
**caractérisé en ce que**
le récepteur de valeurs de mesure (15) est fixe.

3. Procédé selon l'une quelconque des revendications 1 ou 2,
**caractérisé en ce que**
la transmission des valeurs de mesure ne se fait que pendant le calibrage du signal de commande de gravure (GS).

4. Procédé selon l'une quelconque des revendications 1 à 3,
**caractérisé en ce qu'**
on commande les fonctions de l'appareil de mesure de cuvettes mobile (1) par un appareil de manoeuvre (2), mobile, actionné manuellement.

5. Procédé selon l'une quelconque des revendications 1 à 4,
**caractérisé en ce qu'**
- on génère des ordres de commande (SB) dans l'appareil de commande mobile (2), et
- on transmet par une liaison sans fil vers l'appareil de mesure de cuvettes (1) les ordres (SB) de commande des fonctions de l'appareil de mesure de cuvettes (1), mobile à partir de l'appareil de manoeuvre mobile (2).

6. Procédé selon l'une quelconque des revendications 1 à 5,
**caractérisé en ce qu'**
on commande le positionnement de l'appareil de mesure de cuvettes (2) par rapport au cylindre d'impression (3) par l'appareil de manoeuvre mobile (2).

7. Procédé selon l'une quelconque des revendications 1 à 6,
**caractérisé en ce qu'**
avec l'appareil de manoeuvre (2), mobile on commande la focalisation de l'appareil de mesure de cuvettes (1) sur le cylindre d'impression (3).

8. Procédé selon l'une quelconque des revendications 1 à 7,
**caractérisé en ce qu'**
avec l'appareil de manoeuvre mobile (2) on commande l'éclairage des cuvettes (13) gravées.

9. Procédé selon l'une quelconque des revendications 1 à 8,
**caractérisé en ce que**
l'appareil de mesure de cuvettes (1), mobile et/ou l'appareil de manoeuvre (2) sont alimentés par une source de tension rechargeable.

10. Dispositif pour déterminer les dimensions de cuvettes à graver dans une machine de gravure de cylindre d'impression pour la taille douce,
**caractérisé en ce que**
- le dispositif est réalisé sous la forme d'un appareil de mesure de cuvettes (1), mobile, qui se place chaque fois sur le cylindre d'impression (3) à mesurer, et
- on transmet par une liaison sans fil les dimensions des cuvettes (13) fournies par l'appareil de mesure de cuvettes (1), mobile à l'aide d'un émetteur de valeurs de mesure (10), intégré vers un récepteur de valeurs de mesure (15) de préférence un récepteur de valeurs de mesure (15) mobile, et on en poursuit le traitement.

11. Dispositif selon la revendication 10,
**caractérisé en ce que**
l'appareil de mesure de cuvettes (1), mobile comprend les éléments suivant :
- une caméra vidéo (4) pour prendre une image vidéo des cuvettes (13),
- une source d'éclairage (7) pour éclairer les cuvettes (13),
- un étage d'exploitation d'image (8) relié à la caméra vidéo (4) pour déterminer les dimensions des cuvettes (13) par exploitation électronique de l'image vidéo, et
- un émetteur de valeurs de mesure (10) relié à l'étage d'exploitation d'image (8) pour transmettre par une liaison sans fil les dimensions déterminées des cuvettes (13) vers un récepteur fixe de valeurs de mesure (15).

12. Dispositif selon la revendication 10,
**caractérisé en ce que**
le dispositif comporte une source de tension rechargeable (12).

13. Dispositif selon l'une quelconque des revendications 10 ou 11,
**caractérisé en ce que**
la source d'éclairage (7) est commandée pour corriger l'éclairage des cuvettes (13).

14. Dispositif selon l'une quelconque des revendications 10 à 13,
**caractérisé par**
un dispositif de positionnement (5) commandé, coopérant avec la caméra vidéo (4) pour positionner et/ou focaliser la caméra vidéo (4).

15. Dispositif selon l'une quelconque des revendications 10 à 14,
**caractérisé par**
un étage de commande (6) relié au dispositif de positionnement (5) et à la source d'éclairage (7) pour commander le dispositif de positionnement (5) et/ou la source d'éclairage (7) en fonction des ordres (SB).

16. Dispositif selon l'une quelconque des revendications 10 à 15,
**caractérisé par**
un récepteur d'ordres (11) relié à l'étage de commande (6) qui reçoit les ordres (SB) par une liaison sans fil.

17. Dispositif selon l'une quelconque des revendications 10 à 16,
**caractérisé par**
un écran de contrôle (9) pour contrôler l'opération de mesure.

18. Dispositif selon l'une quelconque des revendications 10 à 17,
**caractérisé en ce que**
- l'appareil de manoeuvre mobile (2) à commande manuelle génère les ordres (SB), et
- les ordres (SB) sont transmis par l'appareil de manoeuvre mobile (2) à l'aide d'un émetteur d'ordres (19) par une liaison sans fil vers l'appareil de mesure de cuvettes (1), mobile.

19. Dispositif selon la revendication 18,
**caractérisé en ce que**
les ordres (SB) sont générés dans l'appareil de commande mobile (2) par un clavier (17) manuel et/ou par un moyen de positionnement (18) à commande manuelle.

20. Dispositif selon l'une quelconque des revendications 18 ou 19,
**caractérisé en ce que**
l'appareil de manoeuvre (2) mobile comporte une source de tension d'alimentation rechargeable (21).

21. Dispositif selon l'une quelconque des revendications 18 à 20,
**caractérisé en ce que**
l'appareil de manoeuvre mobile (2) est activé par un ordre de libération envoyé par la machine à graver.

22. Machine à graver pour graver des cylindres d'impression de taille douce comprenant:
- un cylindre d'impression (3) monté en rotation, entraîné par un premier moyen d'entraînement (26),
- un organe de gravure (27) recevant un signal de commande de gravure (GS) pour graver des cuvettes dans le cylindre d'impression (3), cet organe étant déplacé le long du cylindre d'impression (3) par un second moyen d'entraînement (31),
- un étage de préparation de signaux (32, 33, 34, 38) pour générer le signal de gravure (GS) de l'organe de gravure (27), et
- un calculateur de gravure d'échantillon (41) qui fournit les valeurs du signal de commande de gravure pour graver des cuvettes (13) et qui compare les dimensions réelles fournies par le dispositif de mesure des cuvettes (13) représentant les valeurs de teinte réelles à des dimensions de consigne déterminant les valeurs de teinte de consigne prédéterminées, pour fournir des valeurs de réglage servant au calibrage du signal de commande de gravure (GS),
**caractérisée en ce que**
- le dispositif de mesure est un appareil de mesure de cuvettes (1), mobile qui se place chaque fois sur le cylindre d'impression à mesurer (3), et
- les dimensions des cuvettes (13) fournies par l'appareil de mesure de cuvettes (1), mobile sont transmises par un émetteur de valeurs de mesure (1), intégré, par une transmission sans fil vers un récepteur de valeurs de mesure (15), fixe installé dans la machine de gravure pour la suite du traitement.

23. Dispositif selon la revendication 22,
**caractérisé en ce que**
l'appareil de mesure de cuvettes (1), mobile comprend :
- une caméra vidéo (4) pour prendre une image vidéo des cuvettes (13),
- un dispositif de positionnement (5) coopérant avec la caméra vidéo (4) et commandé par des ordres (SB) pour positionner et/ou focaliser la caméra vidéo (4),
- une source d'éclairage (7) commandée par des ordres (SB) pour éclairer les cuvettes (13),
- un étage d'exploitation d'image (8) relié à la caméra vidéo (8) pour déterminer les dimensions des cuvettes (13) par l'exploitation électronique de l'image vidéo,
- une source de tension de fonctionnement (12) rechargeable, et
- un émetteur de valeurs de mesure (10) relié à l'étage d'exploitation d'image (8) pour transmettre par une liaison sans fil les dimensions obtenues des cuvettes (13) à un récepteur de valeurs de mesure (15), fixe.

24. Machine de gravure selon l'une quelconque des revendications 22 ou 23,
**caractérisée en ce que**
- l'appareil de manoeuvre (2), mobile à commande manuelle génère les ordres (SB), et
- les ordres (SB) sont transmis par l'appareil de manoeuvre (2), mobile par un émetteur d'ordres (19) par une liaison sans fil vers l'appareil de mesure de cuvettes (1), mobile.
